# EUROPEAN PATENT APPLICATION

(11) **EP 1 333 351 A1**
(43) Date of publication of application: **06.08.2003**
(21) Application number: 02250672.9
(22) Date of filing: 31.01.2002
(51) Int. Cl.: G06F 1/00

(54) **System and method for electronic file transmission**

(71) Applicant: Culture. Com. Technology (Macau) Ltd., Macau (CN)
(72) Inventor: Chi, Feng-Chia, c/o Culture.Com Technology (Macau), Macau (CN)
(74) Representative: Ablett, Graham Keith

(57) **Abstract**

The present invention relates to a system and a method for electronic file transmission applied to a network environment (4), whereby electronic files are encrypted and decrypted with hardware serial numbers of file reading devices (5) that are authorized terminals for file unloading or downloading transmission. Since each hardware serial number is unique for a particular file reading device, only that reading device can decrypt an encrypted file. Moreover, a decrypted or unencrypted file is made to be similarly encrypted by means of the unique hardware serial number of the file reading device where the file is to be stored. This therefore effectively prevents the occurence of unauthorized copying and propagation of electronic files.

## Description

### FIELD OF THE INVENTION

The present invention relates to systems and methods for electronic file transmission, and more particularly, to a system and a method for electronic file transmission that employ data encryption and decryption for preventing file transmission in a network.

### BACKGROUND OF THE INVENTION

In a current network system, it would be more preferable for allowing terminal users to obtain required digital information such as electronic books (e-books) through a safe and convenient transaction mechanism. Information providers e.g. publishers can accordingly establish information servers, in which digital information and electronic files are stored, and able to be retrieved and downloaded through Internet by the users in the use of digital electronic devices such as personal computers, personal digital assistants (PDA) or electronically readers.

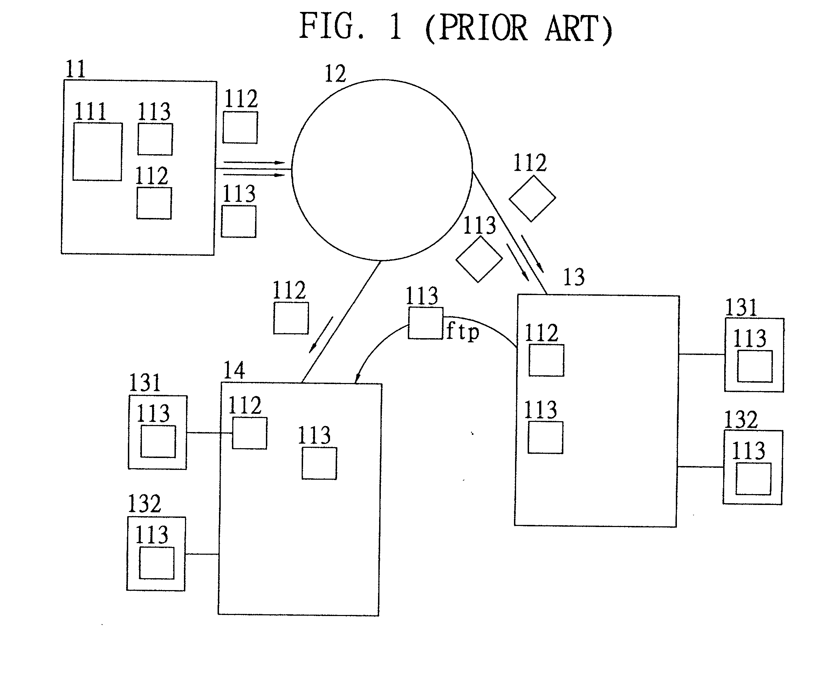

Referring to FIG. 1, a conventional system for digital information or e-book transmission is provided with an information server 11 to be connected to a personal computer 13 via Internet 12.

A digital information provider, such as a publisher, may set up a website 111 in the information server 11 for allowing a user to download an electronic file 113 from the website 111, wherein the electronic file 113 can be an unencrypted file. In operation, after logging in the website 111, the user needs to provide personal data and register for membership, so as to obtain reading software 112 for reading electronic files. With the reading software 112 being installed, the user can execute the reading software 112 for retrieving and downloading the electronic file 113 from the website 111 of the information server 11.

In particular, first, a user of the personal computer 13 requests for being linked to the information server 11, and logs in the website 111 for membership registration. After becoming a member, the user downloads the reading software 112 for use in subsequent retrieval of digital information provided by the publisher. In order to retrieve a desired electronic file 113, the user of the personal computer 13 needs to submit a file retrieval request to the website 111 of the information server 11. After the website 111 authenticates the user is a registered member, it would provide the electronic file 113 through Internet 12 to the personal computer 13, whereby the user can operate the reading software 112 and read the electronic file 113. In the meantime, the electronic file 113 can be stored in a hard disk of the personal computer 13, or in a floppy disk 131 or a compact disk 132. However, it may occur that, for example, another personal computer 14 can obtain the electronic file 113 without being authorized by the publisher. A user of this personal computer 14 similarly logs in the website 111 of the information server 11, and registers for downloading the reading software 112. For retrieving the electronic file 113, instead of accessing the website 111 via Internet 12, the user of the personal computer 14 can get the electronic file 113 directly from the personal computer 13 by means of FTP (File Transfer Protocol), or download the electronic file 113 from the floppy disk 131 or compact disk 132, whereby the electronic file 13 can then be read through the use of the reading software 112. In this case, if the publisher desires to make profits from its members for file downloading, the user of the personal computer 14 who obtains the unauthorized electronic file 113 directly from the personal computer 13, would not be charged.

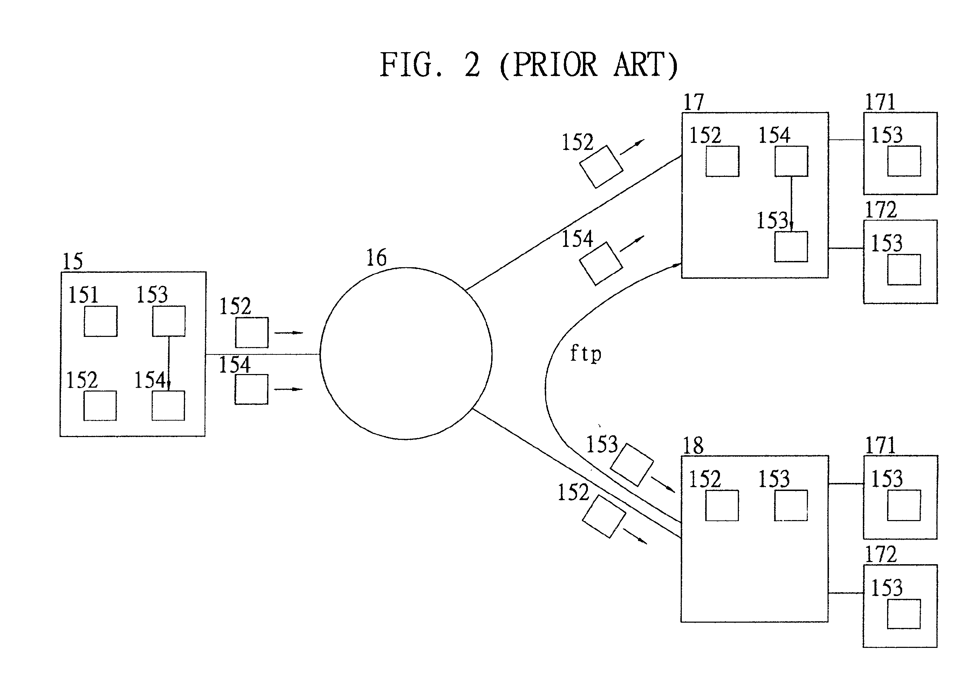

Referring to FIG. 2, another conventional transmission system for digital information or e-books is associated with an information server 15 to be connected to a personal computer 17 via Internet 16.

A website 151 set up in the information server 15 by a digital information provider, such as a publisher, allows a user of the personal computer 17 to retrieve required digital information e.g. an electronic file 153, which electronic file 153 is encrypted with 128-bit encryption technique to become an encrypted file 154. First, the user registers for membership in the website 151, and is allowed to download reading software 152 for reading electronic files. With the reading software 152 being installed, the user can execute the reading software 152 that is used to directly download the encrypted file 154 through Internet 16 from the website 151 of the information server 15 and decrypt the downloaded encrypted file 154, so as to allow the user to read the electronic file 153. At the same time, the electronic file 153 obtained by decryption can be stored in a hard disk of the personal computer 17, or in a floppy disk 171 or a compact disk 172. However, similarly as above described, another personal computer 18 may obtain the electronic file 153 with no authorization from the publisher. Once the personal computer 18 registers in the website 151 and downloads the reading software 152, a user of the personal computer 18 can get the electronic file 153 directly from the computer 17 in a FTP manner, or directly download the electronic file 153 from the floppy disk 171 or compact disk 172. As such, without needing to access the website 151 for file retrieval or conduct file decryption, user of the personal computer 18 can simply read the unauthorized electronic file 153 by using the reading software 152. In this case, the publisher would lose profits from the user of the personal computer 18 who illegally obtains the electronic file 153 from the personal computer 17.

It can be found from the above that, although an electronic file is beforehand encrypted and transmitted in the form of an encrypted file to a personal computer, the encrypted file is decrypted back to the original electronic file by using reading software for file reading in the personal computer, and stored in the unencrypted form by a user of the personal computer. As a result, such an unencrypted electronic file can easily obtained and retrieved from the personal computer by other users who are also equipped with the same reading software for file reading. A publisher who provides the electronic file would be incapable of preventing digital information from being unauthorizedly copied and propagated. Therefore, how to build up a safe and fair transaction mechanism for digital information communication that can effectively prevent the rights and satisfy the requirements for both information providers and users, is a critical problem to solve.

### SUMMARY OF THE INVENTION

A primary objective of the present invention is to provide a system and a method for electronic file transmission, which are applied in a network environment, and encrypt an electronic file with a hardware serial number of a particular file reading device before file transmission. The encrypted electronic file is then transmitted through the network by virtue of PPTP (Point-to-Point Tunneling Protocol) to an authorized user of the file reading device by which the user can upload or download encrypted files. Since the transmitted electronic file is encrypted with the hardware serial number of the file reading device, the user can only uses the file reading device to download and decrypt the encrypted electronic file for file reading; afterwards, the decrypted electronic file is again similarly encrypted with the hardware serial number of the file reading device for file storage. Therefore, unauthorized file copying and propagation can be effectively prevented from occurrence.

According to the foregoing and other objectives, the present invention proposes a system and a method for electronic file transmission, wherein electronic files are transmitted in the encryption form through a network. In particular, by virtue of file encryption/decryption, downloaded encrypted files can only be decrypted and read by authorized receivers of file reading devices who request for file downloading; and the decrypted and read files are again encrypted by the file reading devices for file storage, so that electronic files or digital information can be prevented from being unauthorizedly copied and propagated.

The electronic transmission system of the invention comprises a file processing center, a transmission network, and file reading devices. The file processing center is a digital information server for providing electronic files to be downloaded by the file reading devices, and storing uploaded files from the file reading devices. The transmission network, generally Internet or intranet, serves as a file transmission medium interposed between the file processing center and the file reading devices. The file reading devices serve as terminals for downloading or uploading electronic files, wherein each of the file reading devices is provided with a unique hardware serial number for use in encryption/decryption of electronic files, so that the encrypted electronic files cannot be decrypted by using other reading devices. During electronic file transmission, first, the file processing center records down the hardware serial numbers of the file reading devices.

The file processing center includes an encryption/decryption module that is connected to at least one file reading device via the transmission network, whereby the file encryption/decryption module transmits its public key to the file reading device. When a file reading device requests for downloading an electronic file from the file processing center, the encryption/decryption module symmetrically encrypts the requested file with a hardware serial number of the file reading device, and then transmit the encrypted file to the file reading device via the transmission network. On the other hand, when a file reading device requests for uploading an electronic file to the file processing center, the encryption/decryption module can symmetrically decrypt the uploaded file by using a hardware serial number of the file reading device.

Each file reading device having a retrieval/transmission module, obtains a public key from the file processing center via the transmission network. When the file reading device desires to upload an electronic file to the file processing center, first, the retrieval/transmission module uses its hardware serial number to symmetrically encrypt the electronic file, and then transmits the encrypted electronic file to the file processing center via the transmission network. On the other hand, when the file reading device downloads an electronic file from the file processing center, the retrieval/transmission module uses its hardware serial number to symmetrically decrypt the downloaded electronic file encrypted by the file processing center, so as to obtain the original unencrypted file for being displayed on a screen of the file reading device. Afterwards, if file storage is required, the retrieval/transmission module again use its hardware serial number to symmetrically encrypt the unencrypted file, and stores the encrypted file to a memory unit of the file reading device, or in a floppy disk or a compact disk.

The electronic file transmission method of the invention comprises the following steps.

The first step is to initiate registration. After connection between a file processing center and a file reading device is established via a transmission network, a public key of the file processing center can be transmitted to the file reading device. Then, the file reading device can use the public key to asymmetrically encrypt a hardware serial number thereof by means of a unidirectional function, and transmit the encrypted hardware serial number of the reading device to the file processing center via the transmission network. In response, the file processing center uses a private key thereof to asymmetrically decrypt the encrypted hardware serial number by using a unidirectional function, whereby the unencrypted hardware serial number of the file reading device is obtained and stored in a database of the file processing center.

Next, for file uploading transmission, a retrieval/transmission module of the file reading device can use its hardware serial number to symmetrically encrypt an electronic file, and then upload the encrypted electronic file to the file processing center via the transmission network. Upon receiving the uploaded file from the file reading device, the file processing center searches in its database for a corresponding hardware serial number for the file reading device, and prompts an encryption/decryption module thereof to symmetrically decrypt the encrypted uploaded file for retrieving the original unencrypted file.

Further, for file downloading transmission, when the file reading device requests for downloading an electronic file from the file processing center, the file processing center prompts its encryption/decryption module to symmetrically encrypt a requested electronic file with the hardware serial number of the file reading device, and then transmits the encrypted electronic file to the file reading device via the transmission network. Upon receiving the encrypted file from the file processing center, the retrieval/transmission module of the file reading device is prompted to symmetrically decrypt the encrypted file with the hardware serial number of the file reading device, so that the original unencrypted electronic file can be obtained and displayed on a screen of the file reading device. In the meantime, for file storage, the unencrypted file is again symmetrically encrypted with the hardware serial number by the retrieval/transmission module of the file reading device, and then stored in a memory unit of the file reading device, or in a floppy disk or a compact disk.

The system and method for electronic file transmission of the invention, is characterized of encrypting and decrypting electronic files with particular hardware serial numbers of file reading devices that are authorized terminals for file uploading or downloading transmission. Since each hardware serial number is unique for a particular file reading device, thus for an encrypted electronic file being transmitted to a destined file reading device, only which file reading device can decrypt the encrypted file for file retrieval; in other words, other file reading devices, who may get the transmitted file from the destined file reading device, are incapable of proceeding file decryption for this particular file. Moreover, in respect of file storage, a decrypted or unencrypted file is necessarily encrypted similarly by means of a unique hardware serial number of a file reading device where the file is to be stored. This therefore can effectively prevent unauthorized copying and propagation of electronic files or digital information from occurrence.

### BRIEF DESCRIPTION OF THE DRAWINGS

The present invention can be more fully understood by reading the following detailed description of the preferred embodiments, with reference made to the accompanying drawings, wherein:
FIG. 1 (PRIOR ART) is a schematic diagram showing basic architecture of a conventional electronic file transmission system;
FIG. 2 (PRIOR ART) is a schematic diagram showing basic architecture of another conventional electronic file transmission system;
FIG. 3 is a systematic block diagram showing hardware configuration of a preferred embodiment of an electronic file transmission system of the invention;
FIG. 4 is a systematic block diagram showing hardware configuration of another preferred embodiment of an electronic file transmission system of the invention;
FIG. 5 is a schematic diagram showing data flow directions in the electronic file transmission system of FIG. 3;
FIG. 6 is a flowchart showing the steps involved in an electronic file transmission method by using an electronic file transmission system of the invention;
FIG. 7 is a flowchart showing the procedures involved in a step for initiating registration of FIG. 6;
FIG. 8 is a flowchart showing the procedures involved in a step for transmitting electronic files of FIG. 6;
FIG. 9 is a flowchart showing the steps involved in an electronic file transmission method by using the electronic file transmission system of FIG. 3; and
FIG. 10 is a flowchart showing the steps involved in an electronic file transmission method by using the electronic file transmission system of FIG. 4.

### DETAILED DESCRIPTION OF THE PREFERRED EMBODIMENTS

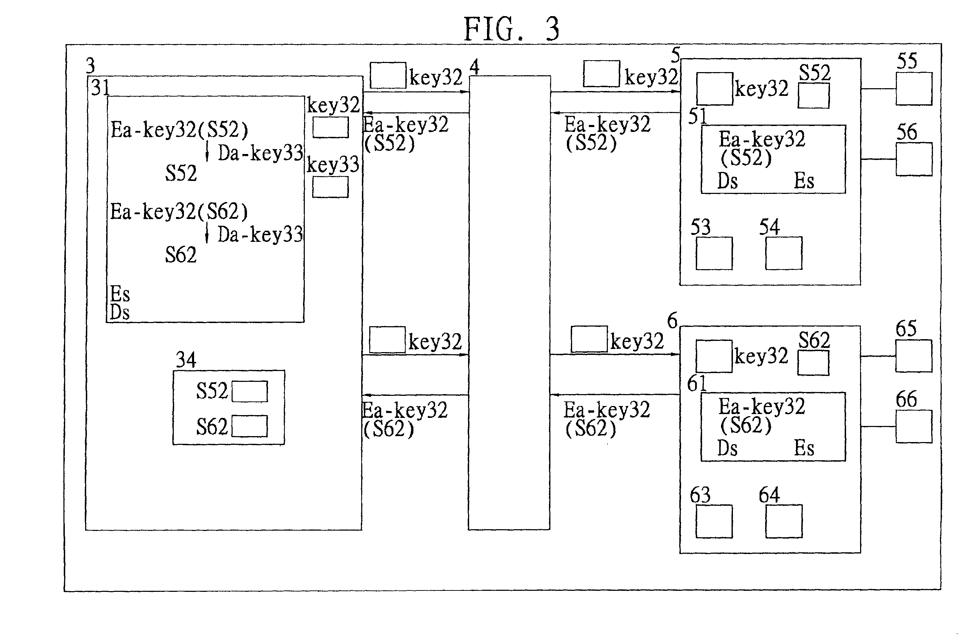

FIG. 3 illustrates hardware configuration of a preferred embodiment of an electronic file transmission system of the present invention. As shown in the drawing, the electronic file transmission system 2 includes a file processing center 3, a transmission network 4, and file reading devices 5, 6 for reading electronic files. The file processing center 3 is a digital information server for providing electronic files to be downloaded by the file reading devices 5, 6, and storing uploaded files from the file reading devices 5, 6. The transmission network 4, generally Internet or intranet, serves as a file transmission medium interposed between the file processing center 3 and the file reading devices 5, 6. The file reading devices 5, 6, such as personal computers, personal digital assistants or e-book readers, serve as terminals for downloading or uploading electronic files, wherein each of the file reading devices 5, 6 is provided with a unique hardware serial number S52, S62 for use in encryption/decryption of electronic files, so that the encrypted electronic files cannot be decrypted by using other reading devices.

The file processing center 3 includes an encryption/decryption module 31 that is connected to the file reading devices 5, 6 via the transmission network 4, whereby a public key (Key32) of the encryption/decryption module 31 is transmitted to the file reading devices 5, 6, respectively. Retrieval/transmission modules 51, 61 of the file reading devices 5, 6 use the public keys (Key32) to encrypt their hardware serial numbers S52, S62 by means of asymmetrically unidirectional function encryption (this encryption method is customarily designated as Ea), which encrypted hardware serial numbers S52, S62 are transmitted to the file processing center 3 via the transmission network 4. In receipt of transmitted data, the encryption/decryption module 31 of the file processing center 3 uses its private key (Key33) to decrypt the encrypted hardware serial numbers S52, S62, and stores the unencrypted hardware serial numbers S52, S62 into a database 34 thereof.

For uploading information or files to the file processing center 3, the retrieval/transmission modules 51, 61 of the file reading devices 5, 6 encrypt electronic files with their hardware serial numbers S52, S62 by using symmetrical encryption methods (Es), and then transmit the encrypted electronic files to the file processing center 3 via the transmission network 4. On the other hard, encrypted electronic files downloaded from the file processing center 3 are decrypted by the retrieval/transmission modules 51, 61 with the hardware serial numbers S52, S62 in operation of symmetrical decryption (Ds) methods. The decrypted electronic files are displayed on screens 53, 63 of the file reading devices 53, 63, respectively. Afterwards, for file storage, the decrypted electronic files are again encrypted with the hardware serial numbers S52, S62 by the retrieval/transmission modules 51, 61, and the encrypted electronic files are stored in memory units 54, 64 of the file reading devices 5, 6, or in floppy disks 55, 65 or compact disks 56, 66.

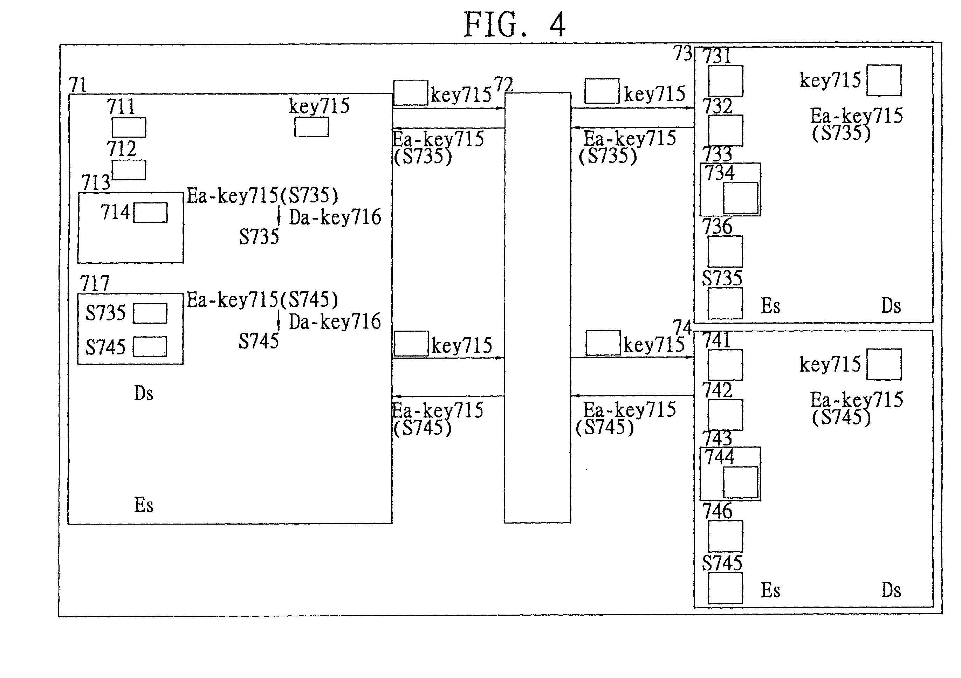

FIG. 4 illustrates hardware configuration of another preferred embodiment of an electronic file transmission system of the invention. As shown in the drawing, the electronic file transmission system 7 includes a file processing center 71, a transmission network 72, and file reading devices 73, 74. The file processing center 71 is a digital information server for providing electronic files to be downloaded by the file reading devices 73, 74, and storing uploaded files from the file reading devices 73, 74. The transmission network 72, generally Internet or intranet, serves as a file transmission medium interposed between the file processing center 71 and the file reading devices 73, 74. The file reading devices 73, 74, such as personal computers, personal digital assistants or e-book readers, serve as terminals for downloading or uploading electronic files, wherein each of the file reading devices 73, 74 is provided with a unique hardware serial number S735, S745 for use in encryption/decryption of electronic files, so that the encrypted electronic files cannot be decrypted by using other reading devices.

The file processing center 71 includes a processor 711, a memory 712, a data storage medium 713 containing an encryption/decryption program 714, and a database 717. The processor 711 can be a microprocessor or a central processing unit, and may execute the encryption/decryption program 714 to function as the foregoing encryption/decryption module 31. The data storage medium 713 can be a hard disk, a floppy disk, a compact disk, an EPROM (erasable programmable read-only memory), an EEPROM (electrically erasable programmable read-only memory) or a flash ROM (read-only memory). As the file processing center 71 is connected to the file reading devices 73, 74 via the transmission network 72, its public key (Key715) can be transmitted to the file reading devices 73, 74, respectively. Retrieval/transmission programs 734, 744 of the file reading devices 73, 74 use the public keys (Key715) to encrypt their hardware serial numbers S735, S745 by means of asymmetrically unidirectional function encryption (Ea), which encrypted hardware serial numbers S735, S745 are transmitted to the file processing center 71 via the transmission network 72. Thereafter, in operation of the encryption/decryption program 714, the processor 711 cooperating with the memory 712 uses a private key (Key716) of the file processing center 71 to decrypt the encrypted hardware serial numbers S735, S745, and stores the unencrypted hardware serial numbers S735, S745 into the database 717.

Each of the file reading devices 73, 74 has a processor 731, 741, a memory 732, 742, a data storage medium 733, 743, and a screen 736 or 746. The data storage media 733, 734 each contains a retrieval/transmission program 734, 744, and can be a hard disk, a floppy disk, a compact disk, an EPROM, an EEPROM or a flash ROM. The processors 731, 741 each can be a microprocessor or a central processing unit, and may execute the retrieval/transmission program 734, 744 to function as the foregoing retrieval/transmission module 31. For uploading information or files to the file processing center 71, the processors 731, 741 can operate the retrieval/transmission programs 734, 744 and cooperate with the memories 732, 742 for encrypting electronic files with the hardware serial numbers S735, S745 by using symmetrical encryption (Es) methods, and then transmit the encrypted electronic files to the file processing center 71 via the transmission network 72. On the other hard, in operation of the retrieval/transmission programs 734, 744, the processors 731, 741 cooperating with the memories 732, 742 can decrypt encrypted electronic files downloaded from the file processing center 71 with the hardware serial numbers S735, S745 in operation of symmetrical decryption (Ds) methods. The decrypted electronic files are displayed on the screens 736, 746 of the file reading devices 73, 74, respectively. Afterwards, for file storage, the decrypted electronic files are again similarly encrypted with the hardware serial numbers S735, S745 by the processors 731, 741, and the encrypted electronic files are stored in the storage media 733, 743 of the file reading devices 73, 74.

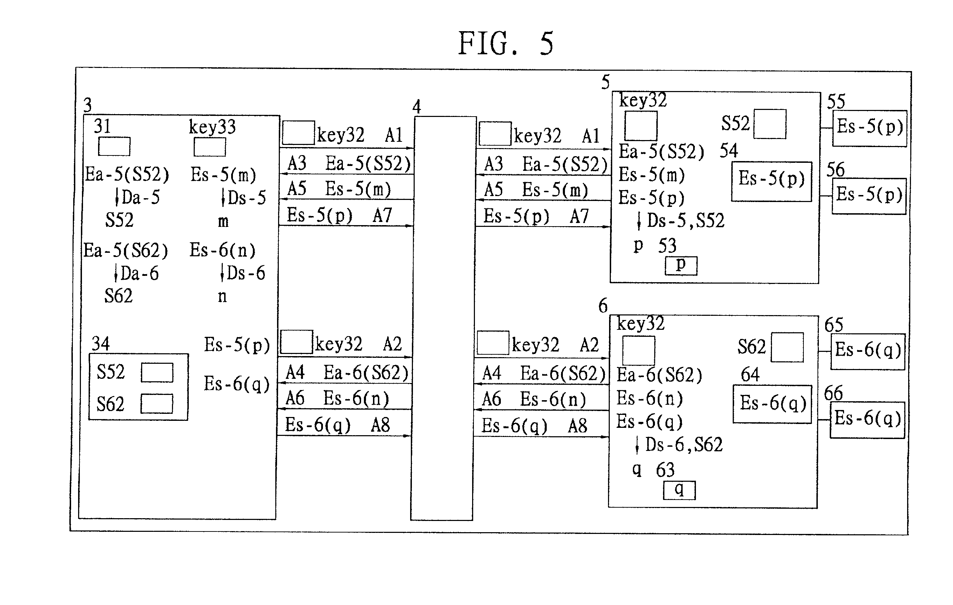

FIG. 5 is a schematic diagram showing data flow directions in the electronic file transmission system 2 of FIG. 3. As shown in the drawing, the file processing center 3 and the reading devices 5, 6 of the electronic file transmission system 2 are interconnected via the transmission network 4, wherein transmission of the public key (Key32) of the file processing center 3 to the file reading device 5 is customarily indicated by a data flow direction A1 of the public key (Key32), and also transmission of the public key (Key32) to the file reading device 6 is customarily indicated by a data flow direction A2 of the public key (Key32).

After the file reading devices 5, 6 receive the public keys (Key32), the retrieval/transmission modules 51, 61 use the public keys (Key32) to encrypt the hardware serial numbers S52, S62 of the file reading devices 5, 6 by means of asymmetrically unidirectional function encryption (Ea-5, Ea-6), which encrypted data Ea-5(S52), Ea-6(S62) are then transmitted to the file processing center 3; wherein Ea-5(S52) transmission from the file reading device 5 to the file processing center 3 is customarily indicated by a data flow direction of A3, and Ea-6(S62) transmission from the file reading device 6 to the file processing center 3 is indicated by a data flow direction of A4.

After the file processing center 3 receives encrypted data Ea-5(S52), Ea-6(S62), the encryption/decryption module 31 decrypts the received encrypted data Ea-5(S52), Ea-6(S62) with the private key (Key33) of the file processing center 3 by means of asymmetrically unidirectional function decryption (Da-5, Da-6), which decryption operates as Da-5(Ea-5(S52))=S52 and Da-6(Ea-6(S62))=S62, so that the unencrypted hardware serial number S52, S62 of the file reading device 5, 6 are obtained and them stored in the database 34.

In a file uploading process to the file processing center 3, the retrieval/transmission modules 51, 61 of the file reading devices 5, 6 firstly encrypt electronic files m, n with the hardware serial numbers S52, S62 by using symmetrical encryption (Es-5, Es-6) methods, and then transmit the encrypted files Es-5(m), Es-6(n) to the file processing center 3 via the transmission network 4. File Es-5(m) transmission from the reading file device 5 to the file processing center 3 via the transmission network 4 is indicated by a data flow direction of A5; file Es-6(n) transmission from the file reading device 6 to the file processing center 3 via the transmission network 4 is indicated by a data flow direction of A6.

Upon receiving the encrypted file Es-5(m), Es-6(n) from the file reading devices 5, 6, the file processing center 3 searches in the database 34 for the hardware serial numbers S52, S62 corresponding to the file reading devices 5, 6. Then, the encryption/decryption module 31 is prompted to decrypt the encrypted files Es-5(m), Es-6(n) with the searched hardware serial numbers S52, S62 by using symmetrical decryption (Ds-5, Ds-6) methods, which decryption operates as Ds-5(Es-5(m))=m, Ds-6(Es-6(n))=n, so that contents of the file m, n can be obtained.

In a file downloading process, firstly, the encryption/decryption module 31 of the file processing center 3 use the hardware serial numbers S52, S62 as encryption keys (KeyS52, KeyS62) in response to the file reading devices 5, 6 that request for file downloading, so as to encrypt electronic files p, q by using symmetrical encryption (Es-5, Es-6) methods, allowing the encrypted files Es-5(p), Es-6(q) to be respectively transmitted to the file reading devices 5, 6 via the transmission network 4. File Es-5(p) transmission from the file processing center 3 to the file reading device 5 via the transmission network 4 is indicated by a data flow direction of A7; file Es-6(q) transmission from the file processing center 3 to the file reading device 6 via the transmission network 4 is indicated by a data flow direction of A8.

Upon receiving the encrypted files Es-5(p), Es-6(q), the retrieval/transmission modules 51, 61 of the file reading devices 5, 6 decrypt the encrypted files Es-5(p), Es-6(q) with the hardware serial numbers S52, S62 by using symmetrical decryption (Ds-5, Ds-6) methods, which decryption operates as Ds-5(Es-5(p)) = p, Ds-6(Es-6(q)) = q, allowing the obtained unencrypted files p, q to be displayed on the screens 53, 63 of the file reading devices 5, 6. For file storage, the retrieval/transmission modules 51, 61 again use the hardware serial numbers S52, S62 as encryption keys (KeyS52, KeyS62) to encrypt the files p, q in operation of symmetrical encryption (Es-5, Es-6) methods, so as to store the encrypted files Es-5(p), Es-6(q) in the memory units 54, 64 of the file reading devices 5, 6, or in the floppy disks 55, 65 or the compact disks 56, 66. It should be noted that, unencrypted files cannot be stored in these memory units, floppy disks or compact disks.

Even though a user of the file reading device 6 obtains an encrypted file Es-5(p) from the file reading device 5 though FTP via the transmission network 4, or directly from the floppy disk 55 or compact disk 56, the retrieval/transmission module 61 of the file reading device 6 is not capable of decrypting the encrypted file Es-5(p), since the hardware serial number S62 of the reading device 6 and symmetrical decryption (Ds-6) are not in operational compliance with decryption of the encrypted file Es-5(p) that is encrypted by the hardware serial number S52 of the file reading device 5. Similarly, the retrieval/transmission module 51 of the file reading device 5 having the hardware serial number S52, is also not allowed to decrypt an encrypted file Es-6(q) from the file reading device 6.

In conclusion from the above described, by using the electronic file transmission system 2 of the invention, transmitted electronic files are encrypted to be uploaded as encrypted files Es-5(m), Es-6(n) to the file processing center 3, or to be downloaded as encrypted files Es-5(p), Es-6(q) by the file reading devices 5, 6. For example, since the encrypted files Es-5(p), Es-6(q) are encrypted with hardware serial numbers S52, S62 by symmetrical encryption (Es-5, Es-6) methods respectively, only the file reading devices 5, 6 having the hardware serial numbers S52, S62 can accordingly operate symmetrical decryption (Ds-5, Ds-6) methods for decrypting the downloaded encrypted files Es-5(p), Es-6(q) and retrieving contents of electronic files p, q. Also, for file storage, the unencrypted electronic files p, q are again similarly encrypted to become encrypted files Es-5(p), Es-6(q) for storage. This therefore assures that only authorized users or receivers can decrypt and retrieve transmitted electronic files, whereby unauthorized copying and propagation of electronic files can be prevented from occurrence.

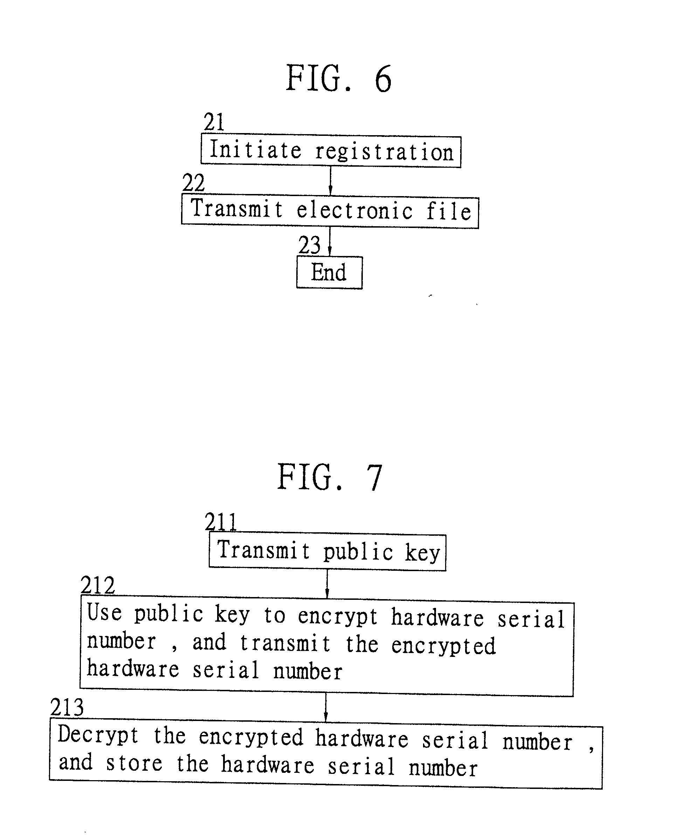

FIG. 6 is a flowchart showing the steps involved in an electronic file transmission method by using an electronic file transmission system of the invention. As shown in the drawing, first in step 21 for initiating registration, allowing a file processing center 3 to obtain hardware serial numbers S52, S62 of file reading devices 5, 6. Thereafter, step 22 is proceeded.

In step 22 for transmitting electronic files between the file processing center 3 and the file reading devices 5, 6, wherein retrieval/transmission modules 51, 61 of the file reading devices 5, 6 can encrypt electronic files with the hardware serial numbers S52, S62 of the file reading devices 5, 6 by using symmetrical encryption (Es-5, Es-6) methods, or decrypt encrypted electronic files with the hardware serial numbers S52, S62 in operation of symmetrical decryption method (Ds-5, Ds-6). Thereafter, step 23 is proceeded.

In step 23, electronic file transmission ends.

FIG. 7 is a flowchart showing the procedures involved in a step for initiating registration of FIG. 6. As shown in the drawing, first in step 211, the file processing center 3 of the electronic file transmission system 2, is connected to the file reading devices 5, 6 via a transmission network 4, allowing a public key (Key32) of the file processing center 3 to be transmitted to the file reading devices 5, 6, respectively. Thereafter, step 212 is proceeded.

In step 212, upon receiving the public keys (Key32), the file reading devices 5, 6 operate the retrieval/transmission modules 51, 61 and the public keys (Key32) to encrypt the hardware serial numbers S52, S62 thereof by means of asymmetrically unidirectional function encryption (Ea-5, Ea-6), whereby encrypted data Ea-5(S52), Ea-6(S62) are transmitted to the file processing center 3. Thereafter, step 213 is proceeded.

In step 213, after the file processing center 3 receives the encrypted data Ea-5(S52), Ea-6(S62), an encryption/decryption module 31 thereof is prompted to decrypt the encrypted data Ea-5(S52), Ea-6(S62) with its private key (Key33) by means of asymmetrically unidirectional function decryption (Da-5, Da-6), which decryption operates as Da-5(Ea-5(S52))=S52, Da-6(Ea-6(S62))=S62, so that the unencrypted hardware serial numbers S52, S62 of the file reading devices 5, 6 are obtained and stored in a database 34 of the file processing center 3.

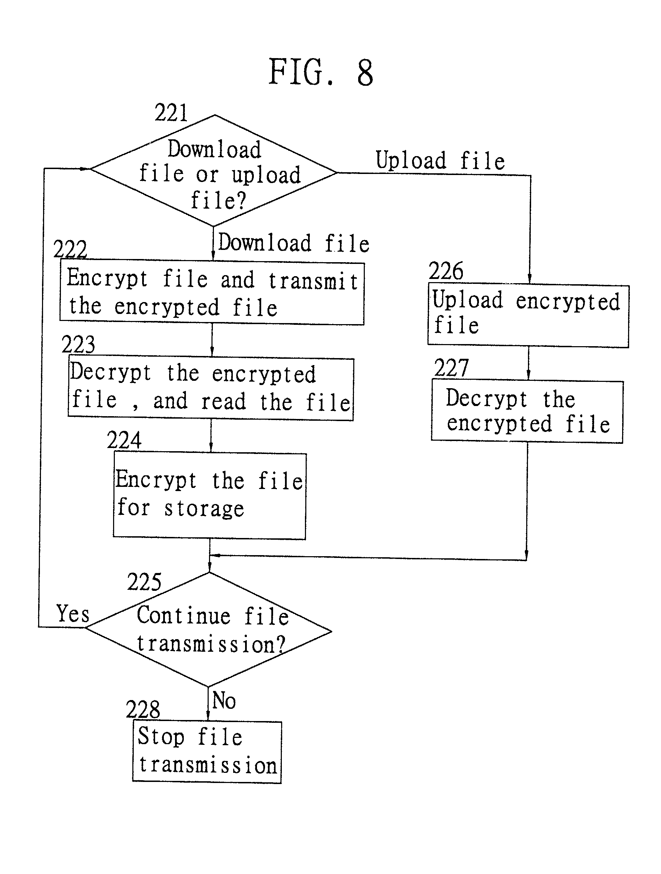

FIG. 8 is a flowchart showing the procedures involved in a step for transmitting electronic files of FIG. 6. As shown in the drawing, first in step 221, it is to determine if the file reading devices 5, 6 request for file downloading from the file processing center 3 or for file uploading to the file processing center 3. If file downloading is requested, then step 222 is proceeded; if file uploading is requested, then step 226 is proceeded.

In step 222 for downloading electronic files, the file processing center 3 prompts the encryption/decryption module 31 to encrypt electronic files p, q with the hardware serial numbers S52, S62 as encryption keys (KeyS52, KeyS62) stored in the database 34 by using symmetrical encryption (Es-5, Es-6) methods, whereby encrypted files Es-5(p), Es-6(q) are transmitted to the file reading devices 5, 6 via the transmission network 4. Thereafter, step 223 is proceeded.

In step 223, the retrieval/transmission modules 51, 61 of the file reading devices 5, 6 decrypt the encrypted files Es-5(p), Es-6(q) with the hardware serial numbers S52, S62 in operation of symmetrical decryption (Ds-5, Ds-6) methods, which decryption proceeds as Ds-5(Es-5(p)) = p, Ds-6(Es-6(q)) = q, so that the electronic files p, q are obtained and then displayed on screens 53, 63 of the file reading devices 5, 6. Thereafter, step 224 is proceeded.

In step 224, if file storage is required, the unencrypted files p, q are again encrypted with the hardware serial numbers S52, S62 as encryption keys (KeyS52, KeyS62) by the retrieval/transmission modules 51, 61 in operation of symmetrical encryption (Es-5, Es-6) methods, thereby allowing encrypted files Es-5(p), Es-6(q) to be stored in memory units 54, 64 of the file reading devices 5, 6, or in floppy disks 55, 65 or compact disks 56, 66. Thereafter, step 225 is proceeded.

In step 225, it is to determine if the file reading devices 5, 6 continue the file uploading or downloading transmission. If file transmission is continued, then the step 221 is returned; or else, step 228 is proceeded for ending the file transmission.

In step 226 for uploading electronic files, the retrieval/transmission modules 51, 61 encrypt electronic files m, n with the hardware serial numbers S52, S62 of the file reading devices 5, 6 by using symmetrical encryption (Es-5, Es-6) methods, whereby encrypted files Es-5(m), Es-6(n) are transmitted to the file processing center 3 via the transmission network 4. Thereafter, step 227 is proceeded.

In step 227, upon receiving the encrypted files Es-5(m), Es-6(n), the file processing center 3 searches in the database 34 for the hardware serial numbers S52, S62 of the file reading devices 5, 6 who upload the electronic files, and then prompts the encryption/decryption module 31 to decrypt the encrypted files Es-5(m), Es-6(n) with the hardware serial numbers S52, S62 by using symmetrical encryption (Ds-5, Ds-6) methods, which decryption operates as Ds-5(Es-5(m)) = m, Ds-6(Es-6(n)) = n, so that the unencrypted files m, n are obtained. Thereafter, the step 225 is returned.

In step 228, file uploading or downloading transmission between the file reading devices 5, 6 and the file processing center 3 is stopped.

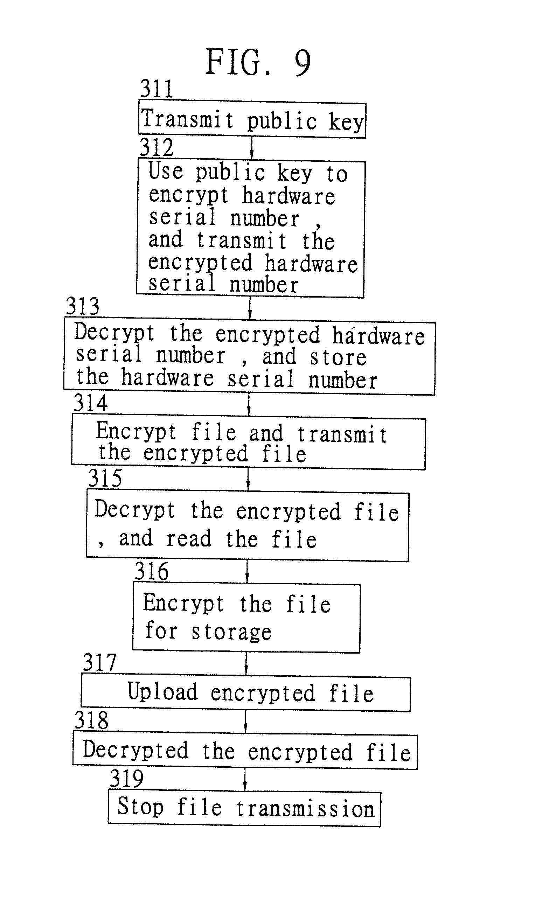

FIG. 9 is a flowchart showing the steps involved in an electronic file transmission method by using the electronic file transmission system of FIG. 3. As shown in the drawing, first in step 311, a file processing center 3 of the electronic file transmission system 2 is connected to file reading devices 5, 6 via a transmission network 4, thereby allowing a public key (Key32) of the file processing center 3 to be transmitted to the file reading devices 5, 6, respectively. Thereafter, step 312 is proceeded.

In step 312, upon receiving the public keys (Key32), the file reading devices 5, 6 adopt retrieval/transmission modules 51, 61 thereof and the public keys (Key32) to encrypt their hardware serial numbers S52, S62 by means of asymmetrically unidirectional function encryption (Ea-5, Ea-6), whereby encrypted data Ea-5(S52), Ea-6(S62) are transmitted to the file processing center 3. Thereafter, step 313 is proceeded.

In step 313, after the file processing center 3 receives the encrypted data Ea-5(S52), Ea-6(S62), an encryption/decryption module 31 thereof is prompted to decrypt the encrypted data Ea-5(S52), Ea-6(S62) with its private key (Key33) by means of asymmetrically unidirectional function decryption (Da-5, Da-6), which decryption operates as Da-5(Ea-5(S52)) = S52, Da-6(Ea-6(S62)) = S62, so that the hardware serial numbers S52, S62 of the file reading devices 5, 6 are obtained and then stored in a database 34 of the file processing center 3. Thereafter, step 314 is proceeded.

In step 314 for downloading electronic files, the file processing center 3 prompts its encryption/decryption module 31 to encrypt electronic files p, q with the hardware serial numbers S52, S62 as encryption keys (KeyS52, KeyS62) stored in the database 34 by using symmetrical encryption (Es-5, Es-6) methods, allowing encrypted files Es-5(p), Es-6(q) to be transmitted via the transmission network 4 to the file reading devices 5, 6 who request for file downloading, respectively. Thereafter, step 315 is proceeded.

In step 315, upon receiving the encrypted files Es-5(p), Es-6(q), the file reading devices 5, 6 prompt the retrieval/transmission modules 51, 61 to decrypt the encrypted files Es-5(p), Es-6(q) with their hardware serial numbers S52, S62 in operation of symmetrical decryption (Ds-5, Ds-6) methods, which decryption proceeds as Ds-5(Es-5(p)) = p, Ds-6(Es-6(q)) = q, whereby the unencrypted files p, q are obtained and then displayed on screens 53, 63 of the file reading devices 5, 6. Thereafter, step 316 is proceeded.

In step 316, if file storage is required, the unencrypted files p, q are again encrypted with the hardware serial numbers S52, S62 as encryption keys (KeyS52, KeyS62) by the retrieval/transmission modules 51, 61 in operation of symmetrical encryption (Es-5, Es-6) methods, thereby allowing encrypted files Es-5(p), Es-6(q) to be stored in memory units 54, 56 of the file reading devices 5, 6, or in floppy disks 55, 65 or compact disks 56, 66. Thereafter, step 317 is proceeded.

In step 317 for uploading electronic files, the retrieval/transmission modules 51, 61 encrypt electronic files m, n with the hardware serial numbers S52, S62 of the file reading devices 5, 6 by using symmetrical encryption (Es-5, Es-6) methods, whereby encrypted files Es-5(m), Es-6(n) are transmitted to the file processing center 3 via the transmission network 4. Thereafter, step 318 is proceeded.

In step 318, upon receiving the encrypted files Es-5(m), Es-6(n), the file processing center 3 searches in the database 34 for the hardware serial numbers S52, S62 of the file reading devices 5, 6 who upload the electronic files, and then prompts the encryption/decryption module 31 to decrypt the encrypted files Es-5(m), Es-6(n) with the hardware serial numbers S52, S62 by using symmetrical encryption (Ds-5, Ds-6) methods, which decryption operates as Ds-5(Es-5(m)) = m, Ds-6(Es-6(n)) = n, so that the unencrypted files m, n are obtained. Thereafter, step 319 is proceeded.

In step 319, file uploading or downloading transmission between the file reading devices 5, 6 and the file processing center 3 is stopped.

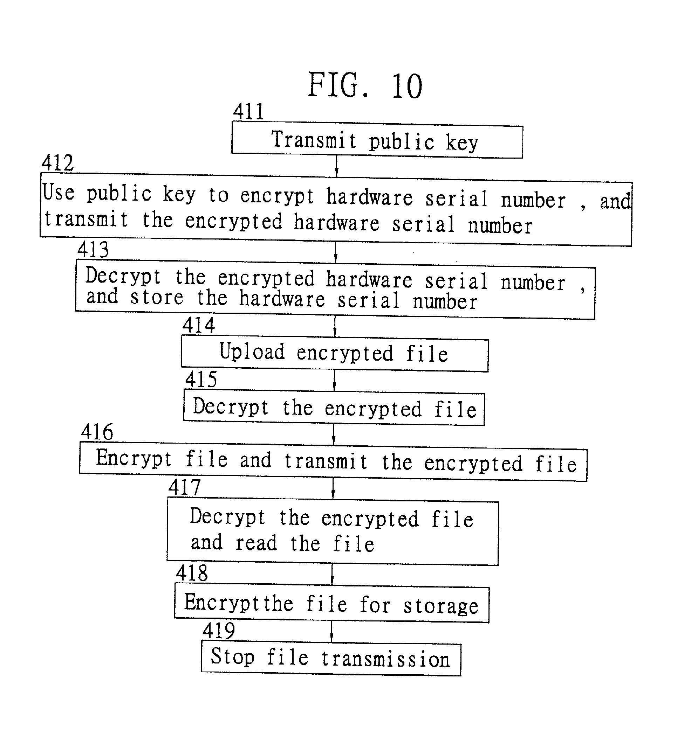

FIG. 10 is a flowchart showing the steps involved in an electronic file transmission method by using the electronic file transmission system of FIG. 4. As shown in the drawing, first in step 411, a file processing center 71 of the electronic file transmission system 7 is connected to file reading devices 73, 74 via a transmission network 72, thereby allowing a public key (Key715) of the file processing center 71 to be transmitted to the file reading devices 73, 74, respectively. Thereafter, step 412 is proceeded.

In step 412, upon receiving the public keys (Key715), processors 731, 741 of the file reading devices 73, 74 execute retrieval/transmission programs 734, 744 and cooperate with memories 732, 742, so as to encrypt their hardware serial numbers S735, S745 with the public keys (Key715) by means of asymmetrically unidirectional function encryption (Ea-5, Ea-6), whereby encrypted data Ea-5(S735), Ea-6(S745) are transmitted to the file processing center 71 via the transmission network 72. Thereafter, step 413 is proceeded.

In step 413, after the file processing center 71 receives the encrypted data Ea-5(S735), Ea-6(S745), a processor 711 thereof executes an encryption/decryption program 714 and cooperates with a memory 712, so as to decrypt the encrypted data Ea-5(S735), Ea-6(S745) with its private key (Key33) by means of asymmetrically unidirectional function decryption (Da-5, Da-6), which decryption operates as Da-5(Ea-5(S735)) = S735, Da-6(Ea-6(S745)) = S745, thereby allowing the hardware serial numbers S735, S745 to be obtained and then stored in a database 717 of the file processing center 71. Thereafter, step 414 is proceeded.

In step 414 for uploading electronic files, the processors 731, 741 execute the retrieval/transmission programs 734, 744 and cooperate with the memories 732, 742, so as to encrypt electronic files m, n with the hardware serial numbers S735, S745 of the file reading devices 73, 74 by using symmetrical encryption (Es-5, Es-6) methods, whereby encrypted files Es-5(m), Es-6(n) are transmitted to the file processing center 71 via the transmission network 72. Thereafter, step 415 is proceeded.

In step 415, upon receiving the encrypted files Es-5(m), Es-6(n), the file processing center 71 searches in the database 717 for the hardware serial numbers S735, S745 of the file reading devices 73, 74 who upload the electronic files, and then executes the encryption/decryption program 714 and cooperates with the memory 712, so as to decrypt the encrypted files Es-5(m), Es-6(n) with the hardware serial numbers S735, S745 by using symmetrical encryption (Ds-5, Ds-6) methods, which decryption operates as Ds-5(Es-5(m)) = m, Ds-6(Es-6(n)) = n, so that the unencrypted files m, n are obtained. Thereafter, step 416 is proceeded.

In step 416 for downloading electronic files, the processor 711 of the file processing center 71 executes the encryption/decryption program 714 and cooperates with the memory 712, so as to encrypt electronic files p, q with the hardware serial numbers S735, S745 as encryption keys (KeyS735, KeyS745) stored in the database 717 by using symmetrical encryption (Es-5, Es-6) methods, allowing encrypted files Es-5(p), Es-6(q) to be transmitted via the transmission network 72 to the file reading devices 73, 74 who request for file downloading, respectively. Thereafter, step 417 is proceeded.

In step 417, upon receiving the encrypted files Es-5(p), Es-6(q), the processors 731, 741 of the file reading devices 73, 74 execute the retrieval/transmission programs 734, 744 and cooperate with the memories 732, 742, so as to decrypt the encrypted files Es-5(p), Es-6(q) with their hardware serial numbers S735, S745 in operation of symmetrical decryption (Ds-5, Ds-6) methods, which decryption proceeds as Ds-5(Es-5(p)) = p, Ds-6(Es-6(q)) = q, whereby the unencrypted files p, q are obtained and then displayed on screens 736, 746 of the file reading devices 73, 74. Thereafter, step 418 is proceeded.

In step 418, if file storage is required, the unencrypted files p, q are again encrypted with the hardware serial numbers S735, S745 as encryption keys (KeyS735, KeyS745) in operation of symmetrical encryption (Es-5, Es-6) methods by the processors 731, 741 in cooperation with the memories 732, 742, whereby encrypted files Es-5(p), Es-6(q) can be stored in data storage media 733, 743 of the file reading devices 73, 74. Thereafter, step 419 is proceeded.

In step 419, file uploading or downloading transmission between the file reading devices 73, 74 and the file processing center 71 is stopped.

In conclusion, the system and method for electronic file transmission of the invention provide significant advantages. For example, by virtue of file encryption and decryption, encrypted files downloaded from a file processing center can be decrypted and read only by authorized receivers of file reading devices who request for file downloading. And, the decrypted and read files are again encrypted by the file reading devices for file storage, wherein storage unencrypted files is not permitted in the file reading devices. This therefore can effectively prevent electronic files or digital information from being unauthorizedly copied and propagated.

The invention has been described using exemplary preferred embodiments. However, it is to be understood that the scope of the invention is not limited to the disclosed embodiments. On the contrary, it is intended to cover various modifications and similar arrangements. The scope of the claims, therefore, should be accorded the broadest interpretation so as to encompass all such modifications and similar arrangements.

## Claims

1. An electronic file transmission method for use with an electronic file transmission system including a file processing center, a transmission network and at least one file reading device, wherein the file reading device is provided with a hardware serial number; the electronic file transmission method comprising the steps of:
(1) performing a file transmission process, allowing an electronic file to be symmetrically encrypted with the hardware serial number of the file reading device and transmitted between the file processing center and the file reading device through the transmission network, whereby the encrypted file is capable of being symmetrically decrypted only by using the same hardware serial number for file retrieval at the file processing center or the file reading device, and the decrypted file is again symmetrically encrypted with the same hardware serial number for file storage; and
(2) ending the file transmission process between the file processing center and the file reading device.

2. The electronic file transmission method of claim 1, wherein the step (1) comprises the steps of:
(1-1) determining if the file reading device requests for downloading an electronic file from the file processing center or for uploading an electronic file to the file processing center, wherein if file downloading is requested, step (1-2) is proceeded; if file uploading is requested, step (1-3) is proceeded;
(1-2) for file downloading, symmetrically encrypting the electronic file with the hardware serial number of the file reading device via the file processing center, and transmitting the encrypted file from the file processing center to the file reading device, where the encrypted file is decrypted by using the same hardware serial number as for file encryption; and
(1-3) for file uploading, symmetrically encrypting the electronic file with the hardware serial number via the file reading device, and transmitting the encrypted file from the file reading device to the file processing center, where the encrypted file is decrypted by using the same hardware serial number as for file encryption.

3. The electronic file transmission method of claim 2, wherein the step (1-2) comprises the steps of:
(1-2-1) requesting via the file reading device for downloading an electronic file from the file processing center; retrieving a hardware serial number corresponding to the file reading device via the file processing center from a database thereof, and symmetrically encrypting the electronic file with the hardware serial number via an encryption/decryption module of the file processing center, allowing the encrypted file to be transmitted from the file processing center to the file reading device through the transmission network;
(1-2-2) upon receiving the encrypted file from the file processing center via the file reading device, symmetrically decrypting the encrypted file via a retrieval/transmission module of the file reading device by using the same hardware serial number as for file encryption, and displaying the decrypted file on a screen of the file reading device;
(1-2-3) symmetrically encrypting the decrypted file with the same hardware serial number via the retrieval/transmission module of the file reading device for file storage; and
(1-2-4) determining via the file reading device if to continue downloading another electronic file from the file processing center, wherein if file downloading is continued, the step (1-2-1) is returned; or else, file downloading is ended.

4. The electronic file transmission method of claim 2 or 3, wherein the step (1-3) comprises the steps of:
(1-3-1) requesting via the file reading device for uploading an electronic file to the file processing center, and symmetrically encrypting the electronic file with the hardware serial number of the file reading device via an encryption/decryption module of the file reading device, allowing the encrypted file to be transmitted from the file reading device to the file processing center through the transmission network;
(1-3-2) upon receiving the encrypted file from the file reading device via the file processing center, retrieving a hardware serial number corresponding to the file reading device, and symmetrically decrypting the encrypted file via an encryption/decryption module of the file processing center by using the retrieved hardware serial number, so as to obtain the file content;
(1-3-3) determining via the file reading device if to continue uploading another electronic file to the file processing center, wherein if file uploading is continued, the step (1-3-1) is returned; or else, file uploading is ended.

5. The electronic file transmission method of any preceding claim, wherein the file processing center is a digital information server for providing electronic files to be downloaded by the file reading device and storing electronic files uploaded from the file reading device

6. The electronic file transmission method of any preceding claim, wherein the transmission network is Internet or intranet.

7. The electronic file transmission method of any preceding claim, wherein the file reading device is a personal computer, a personal digital assistant or an electronic book reader.

8. An electronic file transmission method according to any preceding claim comprising the steps of:
(1-8) performing a registration initiation process, so as to allow the file processing center to obtain the hardware serial number of the file reading device;
(2-8) performing a file transmission process, allowing an electronic file to be symmetrically encrypted with the hardware serial number of the file reading device and transmitted between the file processing center and the file reading device through the transmission network, whereby the encrypted file is capable of being symmetrically decrypted only by using the same hardware serial number for file retrieval at the file processing center or the file reading device, and the decrypted file is again symmetrically encrypted with the same hardware serial number for file storage; and
(3) ending the file transmission process between the file processing center and the file reading device.

9. The electronic file transmission method of claim 8 wherein in the step (1-8) comprises the steps of:
(1-8-1) establishing connection via the transmission network between the file processing center and the file reading device, so as to allow the file processing center to transmit a public key thereof to the file reading device;
(1-8-2) upon receiving the public key from the file processing center via the file reading device, encrypting the hardware serial number of the file reading device via a retrieval/transmission module of the file reading device by using the public key and an encryption method of an asymmetrically unidirectional function, and transmitting the encrypted hardware serial number to the file processing center via the transmission network; and
(1-8-3) upon receiving the encrypted hardware serial number from the file reading device via the file processing center, decrypting the encrypted hardware serial number via an encryption/decryption module of the file processing center by using a private key thereof and a decryption method of an asymmetrically unidirectional function, so as to obtain the unencrypted hardware serial number of the file reading device and store the hardware serial number in a database of the file processing center.

10. An electronic file transmission system, comprising:
at least one file reading device having a hardware serial number, for symmetrically encrypting an electronic file to be uploaded with the hardware serial number of the file reading device, and for symmetrically decrypting a downloaded encrypted file by using the hardware serial number of the file reading device, wherein the decrypted file is again symmetrically encrypted with the same the hardware serial number by the file reading device for file storage;
a file processing center serving as a digital information server, for providing a public key thereof to the file reading device, and for providing electronic files to be downloaded by the file reading device and storing electronic files uploaded from the file reading device; wherein the file processing center includes:
a database for storing the hardware serial number of the file reading device; and
an encryption/decryption module, for asymmetrically decrypting an encrypted hardware serial number from the file reading device by using a private key of the file processing center, so as to obtain the unencrypted hardware serial number and store the hardware serial number in the database; for symmetrically decrypting an uploaded encrypted file from the file reading device by using a hardware serial number stored in the database corresponding to the file reading device, so as to retrieve the file content; and for symmetrically encrypting an electronic file with a hardware serial number of a file reading device that requests for downloading the electronic file, and transmitting the encrypted file to the file reading device; and
a transmission network for connecting the file processing center to the file reading device.
